(19) **Europäisches Patentamt / European Patent Office / Office européen des brevets**

(11) **EP 4 571 602 A1**

(12) **EUROPEAN PATENT APPLICATION**
published in accordance with Art. 153(4) EPC

(43) Date of publication:
**18.06.2025 Bulletin 2025/25**

(21) Application number: **23852578.6**

(22) Date of filing: **08.08.2023**

(51) International Patent Classification (IPC):
**G06N 99/00** $^{(2019.01)}$    **G01N 25/18** $^{(2006.01)}$

(52) Cooperative Patent Classification (CPC):
**G01N 25/18; G06N 99/00**

(86) International application number:
**PCT/JP2023/028972**

(87) International publication number:
**WO 2024/034616 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.08.2022 JP 2022126628**

(71) Applicant: **University Public Corporation Osaka**
**Osaka-shi, Osaka 5360025 (JP)**

(72) Inventors:
• **SHIBAHARA, Masakazu**
  **Sakai-shi, Osaka 599-8531 (JP)**

• **MATSUOKA, Ryo**
  **Sakai-shi, Osaka 599-8531 (JP)**
• **IKUSHIMA, Kazuki**
  **Sakai-shi, Osaka 599-8531 (JP)**
• **MAEDA, Shintaro**
  **Sakai-shi, Osaka 599-8531 (JP)**
• **KITANI, Yuji**
  **Sakai-shi, Osaka 599-8531 (JP)**
• **YAMAUCHI, Yuki**
  **Sakai-shi, Osaka 599-8531 (JP)**

(74) Representative: **De Bortoli, Eros et al**
**Zanoli & Giavarini S.p.A.**
**Via Melchiorre Gioia, 64**
**20125 Milano (IT)**

(54) **ESTIMATION METHOD FOR ESTIMATING ESTIMATION TARGET INCLUDED IN ANALYSIS CONDITION, ANALYSIS METHOD, PROGRAM, AND ESTIMATION DEVICE**

(57)    The present invention provides a method to quickly and accurately estimate an estimation target within an analysis condition. This method includes: measuring data at least one measurement point; performing a first analysis using an analysis condition with the estimation target to obtain a result; performing a second analysis by applying perturbation to the estimation target value used in the first analysis to obtain a result; and calculating a sensitivity matrix based on the first and second analysis results, calculating the error between the first analysis result and the measurement data or data derived from it, and determining the amount to adjust the estimation target value from the sensitivity matrix and error.

[FIG. 1]

EP 4 571 602 A1

**EP 4 571 602 A1**

## Description

### TECHNICAL FIELD

The present invention relates to an estimation method for estimating an estimation target included in an analysis condition, an analysis method, a program, and an estimation device.

### BACKGROUND ART

The finite element method (FEM) can be used to analyze a temperature field, a displacement field, a stress field, etc. (see Non-Patent Document 1, for example).

In addition, sensitivity analysis for finding out a ratio of a change in an output to a change in an input in a system having the input and the output has been known (see Non-Patent Document 2, for example).

### CITATION LIST

### NON-PATENT DOCUMENT

Non-Patent Document 1: Journal of the Japan Welding Society, Vol. 80 (2011), 519-522

Non-Patent Document 2: "Tenki", the bulletin journal of the Meteorological Society of Japan in Japanese, Vol. 59 (2012), No. 11, pp. 49-51

### SUMMARY OF THE INVENTION

### PROBLEM TO BE SOLVED BY THE INVENTION

In order to perform an analysis such as a FEM analysis, a finite difference analysis, a boundary element method analysis, a particle method analysis, a meshfree method analysis, or an analysis with theoretical formula, various types of input information are necessary as analysis conditions. Some of these pieces of input information need to be determined through an experiment. Determining such input information needs trials and errors and takes time. For example, in order to perform a FEM heat conduction analysis, it is necessary to determine what value a normal deviation $\sigma$ that is an index indicating the spread of a heat input distribution has through, for example, an experiment.

The present invention has been accomplished in view of such circumstances and provides an estimation method with which it is possible to quickly and accurately estimate an estimation target included in an analysis condition.

### MEANS FOR SOLVING THE PROBLEMS

The present invention provides an estimation method for estimating at least one estimation target included in an analysis condition from an analysis result and measurement data corresponding to a part of the analysis result or data calculated from the measurement data, the method including: a measurement step of measuring the measurement data on at least one measurement point; a first analysis step of obtaining an analysis result by performing, using an analysis condition including the estimation target, a FEM analysis, a finite difference analysis, a boundary element method analysis, a particle method analysis, a meshfree method analysis, or an analysis with theoretical formula; a second analysis step of setting a value obtained by applying perturbation to a value of the estimation target used in the first analysis step as a value of the estimation target and performing a FEM analysis, a finite difference analysis, a boundary element method analysis, a particle method analysis, a meshfree method analysis, or an analysis with theoretical formula to obtain an analysis result; and a calculation step of calculating a sensitivity matrix on the basis of the analysis result of the first analysis step and the analysis result of the second analysis step, calculating an error between the analysis result of the first analysis step and the measurement data at the measurement point or the data calculated from the measurement data, and calculating an amount for changing the value of the estimation target from the sensitivity matrix and the error, wherein the first analysis step, the second analysis step, and the calculation step are repeated until the error is minimized, the analysis is performed with an initial value being set to the estimation target in the first analysis step performed first, and in the first analysis step performed second and subsequent times, the analysis is performed by setting, as the estimation target, a value obtained by changing the value of the estimation target used in the first analysis step performed previously by the amount for changing calculated in the calculation step performed previously.

### EFFECT OF THE INVENTION

According to the present invention, an estimation target included in an analysis condition can be quickly and accurately estimated by repeating the first and second analysis steps and the calculation step. This has been revealed by experiments and analyses conducted by the inventors of the present application.

### BRIEF DESCRIPTION OF THE DRAWINGS

[Fig. 1] Fig. 1 is a flowchart illustrating an estimation method according to one embodiment of the present invention.
[Fig. 2] Fig. 2(a) is an explanatory diagram of a standard deviation, and Fig. 2(b) is an explanatory diagram of an offset amount of time.

[Fig. 3] Fig. 3 is an explanatory diagram of a calculation method for calculating an error between measurement data and an analysis result of a first analysis step.

[Fig. 4] Fig. 4 illustrates an explanatory diagram of a method for calculating a sensitivity matrix and a mathematical expression.

[Fig. 5] Fig. 5 illustrates mathematical expressions including the sensitivity matrix.

[Fig. 6] Fig. 6 is an explanatory diagram of a calculation method for calculating an amount for changing the value of an estimation target from the sensitivity matrix and the error.

[Fig. 7] Fig. 7 is a diagram illustrating a measurement position in a measurement step.

[Fig. 8] Fig. 8 is a graph illustrating a history of temperatures measured in the measurement step.

[Fig. 9] Fig. 9 is a graph illustrating a change in the value of heat efficiency with respect to trial numbers.

[Fig. 10] Fig. 10 is a graph illustrating a change in the value of a standard deviation with respect to trial numbers.

[Fig. 11] Fig. 11 is a graph illustrating a change in the value of an offset amount of time with respect to trial numbers.

[Fig. 12] Fig. 12 is a graph illustrating a change in the value of a specific heat with respect to trial numbers.

[Fig. 13] Figs. 13(a) to 13(e) are graphs for comparing the history of temperatures measured in the measurement step and analysis results of a heat conduction analysis using heat efficiency, standard deviation, offset amount of time, and specific heat calculated with the estimation method according to the present invention.

[Fig. 14] Fig. 14 is a distribution of out-of-plane displacement of a metal plate that has been subjected to a linear heat treatment.

[Fig. 15] Fig. 15(a) is a graph showing an initial value of yield stress used in the analysis condition, and Fig. 15(b) is a graph showing an estimated value of yield stress calculated using the estimation method according to the present invention.

[Fig. 16] Fig. 16(a) is an analysis model that is an analysis result of a FEM thermo-elasto-plastic analysis under an analysis condition including estimated values calculated with the estimation method according to the present invention, and Figs. 16(b) to 16(d) are graphs for comparing analysis results (out-of-plane displacement distributions) along broken lines A-A', B-B', and C-C' with the measured out-of-plane displacement distributions along the broken lines A-A', B-B', and C-C'.

[Fig. 17] Fig. 17 is an analysis model of a complex structure.

[Fig. 18] Fig. 18 is a graph showing out-of-plane displacement generated along dotted line A-A' of a bottom plate of the complex structure due to assembly welding.

[Fig. 19] Fig. 19 is a graph showing a transition of torch rates $v_0$ and $v_1$ that are estimation targets.

[Fig. 20] Fig. 20 is a graph showing assumed out-of-plane displacement calculated using the estimated torch rate and a measurement value of the out-of-plane displacement after assembly welding of an actual device.

## EMBODIMENTS OF THE INVENTION

The estimation method according to the present invention is an estimation method for estimating at least one estimation target included in an analysis condition from an analysis result and measurement data corresponding to a part of the analysis result or data calculated from the measurement data.

The estimation method according to the present invention includes: a measurement step of measuring the measurement data on at least one measurement point; a first analysis step of obtaining an analysis result by performing, using an analysis condition including the estimation target, a FEM analysis, a finite difference analysis, a boundary element method analysis, a particle method analysis, a meshfree method analysis, or an analysis with theoretical formula; a second analysis step of setting a value obtained by applying perturbation to a value of the estimation target used in the first analysis step as a value of the estimation target and performing a FEM analysis, a finite difference analysis, a boundary element method analysis, a particle method analysis, a meshfree method analysis, or an analysis with theoretical formula to obtain an analysis result; and a calculation step of calculating a sensitivity matrix on the basis of the analysis result of the first analysis step and the analysis result of the second analysis step, calculating an error between the analysis result of the first analysis step and the measurement data at the measurement point or the data calculated from the measurement data, and calculating an amount for changing the value of the estimation target from the sensitivity matrix and the error.

In the estimation method according to the present invention, the first analysis step, the second analysis step, and the calculation step are repeated until the error is minimized. In the first analysis step performed first, the analysis is performed with an initial value being set to the estimation target, and in the first analysis step performed second and subsequent times, the analysis is performed by setting, as the estimation target, a value obtained by changing the value of the estimation target used in the previous first analysis step by the amount for changing calculated in the previous calculation step.

Preferably, the analysis condition includes a plurality of types of the estimation target, the second analysis step is a step of performing, on each of the types of the estimation target, a step of setting a value obtained by applying perturbation to one type of the estimation target included in the plurality of types of the estimation target as a value of the estimation target and performing a FEM analysis, a finite difference analysis, a boundary element method analysis, a particle method analysis, a meshfree method analysis, or an analysis with theoretical formula to obtain an analysis result, and the calculation step is a step of calculating an amount for changing the value of each of the types of the estimation target.

Preferably, the measurement data is time-series data.

Preferably, the measurement step is a step of measuring the measurement data at a plurality of measurement points, and the calculation step is a step of calculating a sensitivity matrix on the basis of the analysis result of the first analysis step and the analysis result of the second analysis step, calculating an error between the analysis result of the first analysis step and the measurement data at each of the measurement points or data calculated from the measurement data, and calculating an amount for changing the value of the estimation target from the sensitivity matrix and the error.

Preferably, the error is a k-th power error.

Preferably, the calculation step includes calculating the amount for changing the value of the estimation target by adding weight to a parameter of the analysis result and a parameter of the estimation target.

Preferably, the first and second analysis steps are steps of performing a heat conduction analysis, and the measurement step is a step of measuring a temperature change at the measurement point when a target object is heated.

Preferably, the estimation target includes at least one of the heat efficiency of a heat source, a heat transfer coefficient, a standard deviation of a heat input distribution, a Goldak heat source parameter, an offset amount in a time direction of the heat input distribution, a specific heat or heat capacity of the target object, a density of the target object, a thermal conductivity of the target object, and actual coordinates (x, y, z) of the measurement point.

Preferably, the first and second analysis steps are steps of performing a thermo-elasto-plastic analysis, and the estimation target includes at least one of a Young's modulus, a Poisson ratio, a yield stress, a linear coefficient of expansion, an anneal temperature, a work-hardening parameter, a creep coefficient, an offset variable of time, an offset variable of space, a mechanical melting temperature, and a parameter regarding a processing condition such as a heat input rate in linear heating.

Preferably, the measurement step is a step for measuring displacement generated by heating/cooling the target object at the measurement point.

Preferably, the first and second analysis steps are steps of performing an electric field analysis, and the estimation target includes at least one of a contact resistance, electric conductivity, an offset variable of time, and an offset variable of space.

The present invention also provides an analysis method of performing a FEM analysis, a finite difference analysis, a boundary element method analysis, a particle method analysis, a meshfree method analysis, or an analysis with theoretical formula using an analysis condition including a value of the estimation target estimated by the estimation method according to the present invention.

Preferably, the analysis method according to the present invention preferably includes a step of performing a heat conduction analysis using an analysis condition including a value of the estimation target estimated by the estimation method according to the present invention, and the heat conduction analysis has an output including at least one of a history of temperatures, a temperature distribution, a weld penetration shape parameter, and a molten pool shape parameter.

Preferably, the analysis method according to the present invention preferably includes a step of performing a thermo-elasto-plastic analysis using an analysis condition including a value of the estimation target estimated by the estimation method according to the present invention, and the thermo-elasto-plastic analysis has an output including at least one of a history of displacement, a displacement distribution, a history of stresses, a stress distribution, a history of strains, a strain distribution, and a residual stress distribution.

Preferably, the analysis method according to the present invention preferably includes a step for performing an electric field analysis using an analysis condition including a value of the estimation target estimated by the estimation method according to the present invention, and the electric field analysis has an output including at least one of a history of generated heat, a distribution of generated heat, a history of current densities, a current density distribution, a history of potentials, and a potential distribution.

The present invention also provides a program for causing a computer to execute an estimation method of estimating at least one type of estimation target included in an analysis condition from an analysis result and measurement data corresponding to a part of the analysis result or data calculated from the measurement data.

The present invention also provides an estimation device including a control unit that is provided to execute an estimation method for estimating at least one type of estimation target included in an analysis condition from an analysis result and measurement data corresponding to a part of the analysis result or data calculated from the measurement data.

Preferably, the control unit is provided to transmit at least a part of the analysis condition to an outside of the estimation device and receive at least a part of the analysis result from the outside of the estimation device in the first or second analysis step. The outside of the estimation device is, for example, a server on the Internet.

An embodiment of the present invention will be described below with reference to the drawings. The configurations illustrated in the drawings or in the following description are merely exemplary, and the scope of the present invention is not limited thereto.

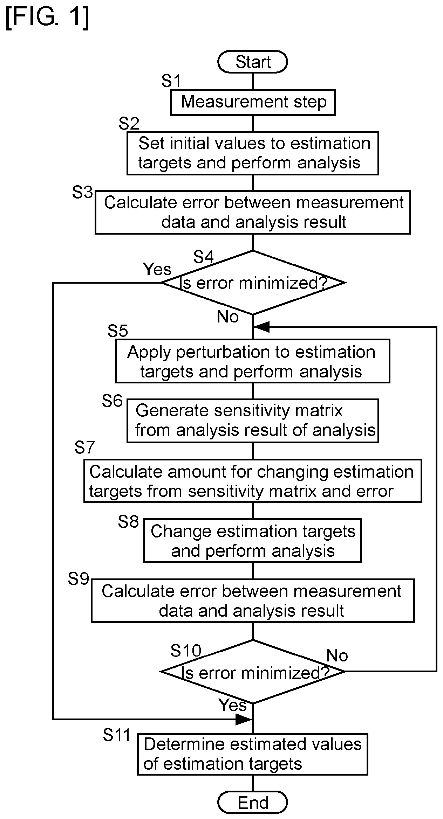

Fig. 1 is a flowchart illustrating an estimation method according to the present embodiment.

The estimation method according to the present embodiment is a method for estimating at least one type of estimation target included in an analysis condition from an analysis result and measurement data corresponding to a part of the analysis result or data calculated from the measurement data. The estimation method according to the present embodiment can be executed by a computer. The estimation method according to the present embodiment can also be executed by an estimation device including a control unit. The control unit can include, for example, an arithmetic processing device (e.g., CPU), a RAM, a storage device (e.g., HDD), a network controller, and a video controller. In addition, the computer or the estimation device can be connected to the Internet. The computer or the estimation device may execute an analysis such as a FEM analysis or receive an analysis result of the analysis such as the FEM analysis executed by a server on the Internet online.

The analysis condition is an analysis condition using a FEM analysis, a finite difference analysis, a boundary element method analysis, a particle method analysis, a meshfree method analysis, or an analysis with theoretical formula, and the analysis result is a result of a FEM analysis, a finite difference analysis, a boundary element method analysis, a particle method analysis, a meshfree method analysis, or an analysis with theoretical formula.

It is possible to perform, for example, a heat conduction analysis, an elastic analysis, an elasto-plastic analysis, a thermo-elasto-plastic analysis, a thermal stress analysis, a vibration analysis, an electric field analysis, a spot welding analysis, or an electromagnetic analysis with the FEM analysis, the finite difference analysis, the boundary element method analysis, the particle method analysis, the meshfree method analysis, or the analysis with theoretical formula.

A target object for the FEM analysis, the finite difference analysis, the boundary element method analysis, the particle method analysis, the meshfree method analysis, or the analysis with theoretical formula may be, for example, a metal plate, a T joint, a lap joint, or a multilayer welded joint. The target object may be a solid.

A heat source model for the FEM analysis, the finite difference analysis, the boundary element method analysis, the particle method analysis, the meshfree method analysis, or the analysis with theoretical formula may be, for example, gas heating, gas welding, gas cutting, arc welding, laser welding, resistance welding, or thermal spraying. The heat source model may heat any portion of a target solid (target object).

In a case where, for example, at least one (analysis result Y) of time-series data of a temperature distribution, a history of temperatures, a weld penetration shape parameter (weld penetration width $B_a$, weld penetration depth $B_b$, etc.), and a molten pool shape parameter (thickness, width, and length of a molten pool) of the target object (e.g., metal plate) is calculated with a heat conduction analysis, the analysis is performed using, for example, an analysis model divided into a large number of elements (meshes) corresponding to the shape and dimension of the target object, a heat source model (heat efficiency, heat transfer coefficient, etc.), a material constant (specific heat, heat capacity, density, thermal conductivity, etc.), a heat source parameter (standard deviation of normal distribution (heat input distribution), Goldak heat source parameter), an offset variable of time, an offset variable of space (coordinates x, y, z), or a parameter regarding processing conditions such as a heat input rate in linear heating, as an analysis condition X.

In a case where, for example, at least one (analysis result Y) of a displacement distribution, a history of displacement, a history of stresses, a stress distribution, a history of strains, a strain distribution, and a residual stress distribution of the target object (e.g., metal plate) is calculated with a thermo-elasto-plastic analysis, the analysis is performed using, for example, an analysis model divided into a large number of elements (meshes) corresponding to the shape and dimension of the target object, time-series data of a temperature distribution, a material constant (Young's modulus, Poisson ratio, yield stress, linear coefficient of expansion, creep coefficient, mechanical melting temperature, anneal temperature, work-hardening parameter, etc.), an offset variable of time, an offset variable of space (coordinates x, y, z), or a parameter regarding processing conditions such as a heat input rate in linear heating, as the analysis condition X.

In a case where, for example, at least one (analysis result Y) of a history of generated heat, a distribution of generated heat, a history of current densities, a current density distribution, a history of potentials, and a potential distribution is calculated with an electric field analysis (e.g., spot welding analysis), the analysis is performed using, for example, a contact resistance, electric conductivity, an offset variable of time, or an offset variable of space (coordinates x, y, z) as the analysis condition X.

The calculation with each of the analyses can be expressed as $Y = F(X)$.

The estimation target is information to be estimated in various pieces of input information included in the analysis condition X. The estimation target may include a plurality of types of information. In the following description, the estimation target may be referred to as parameter. The estimation target may be the one at each temperature (e.g., at each temperature in 10°C intervals).

The type of the estimation target is, for example, a heat conduction parameter (temperature dependence estimation) such as a specific heat or thermal conductivity or a dynamic parameter (temperature dependence estimation) such as a Young's modulus, a yield stress, or a linear coefficient of expansion.

In a case where, for example, time-series data of a temperature distribution (analysis result Y) of the target object (e.g., metal plate) is calculated with a heat conduction analysis, the estimation target (parameter) can include at least one of heat efficiency $\eta$ of a heat source, a standard deviation $\sigma$ of the heat input distribution, an offset amount $t_0$ in the time direction of the heat input distribution, a specific heat c of the target object, actual coordinates (x, y, z) at the measurement point, a heat transfer coefficient, a Goldak heat source parameter, a heat capacity of the target object, a density of the target object, and a thermal conductivity of the target object.

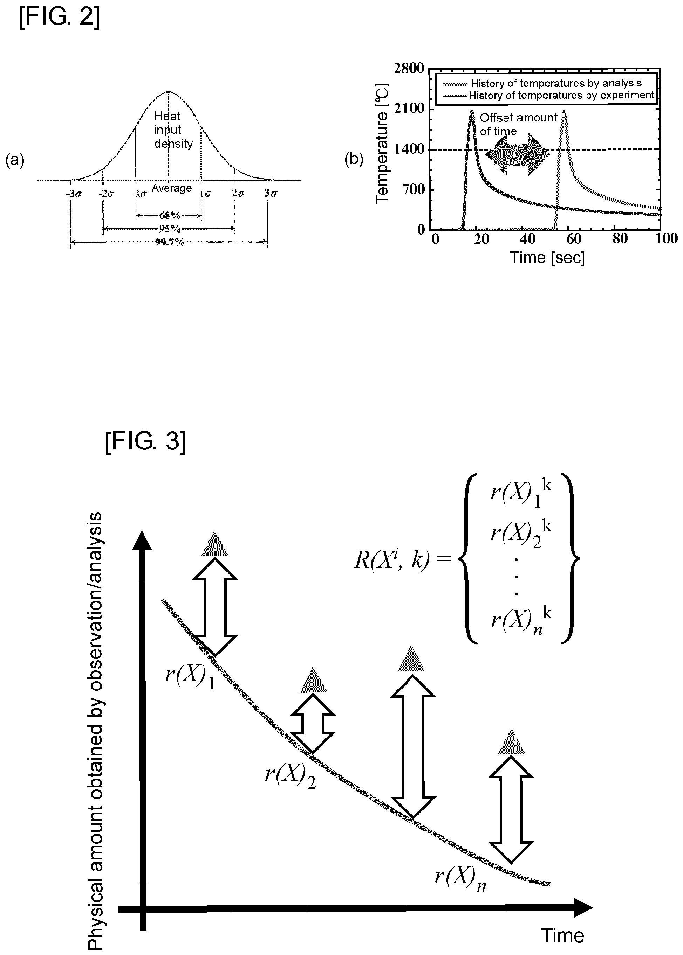

Fig. 2(a) is an explanatory diagram of a standard deviation $\sigma$ of the heat input distribution, and Fig. 2(b) is an explanatory diagram of an offset amount $t_0$ in the time direction of the heat input distribution.

It can be assumed that the heat input distribution of the heat source model included in the analysis condition has a normal distribution (or overlap thereof), and the standard deviation indicates the spread of a normal distribution as illustrated in Fig. 2(a).

The offset amount $t_0$ in the time direction of the heat input distribution represents a deviation in the time direction between a change in temperature (time-series data of temperature) measured in measurement step S1 and a change in temperature (time-series data of temperature) calculated with the FEM heat conduction analysis as illustrated in Fig. 2(b).

In the thermo-elasto-plastic analysis, for example, the estimation target (parameter) can include at least one of a Young's modulus, a Poisson ratio, a yield stress, a linear coefficient of expansion, an anneal temperature, a work-hardening parameter, a creep coefficient, an offset variable of time, an offset variable of space, a mechanical melting temperature, and a parameter regarding processing conditions such as a heat input rate in linear heating.

In the electric field analysis, for example, the estimation target (parameter) can include at least one of a contact resistance, an electric conductivity, an offset variable of time, and an offset variable of space.

The measurement data is data corresponding to a part of the analysis result or data for calculating the data and is measured in measurement step S1. The measurement data is measurement data at a measurement point of the target object corresponding to the measurement point set in the analysis model. Note that there may be an error between the measurement point of the analysis model and the measurement point in measurement step S1. The analysis condition may include the coordinates at the actual measurement point as the estimation target (parameter). The measurement data or the data calculated from the measurement data may be time-series data.

The measurement step S1 may include a step for calculating the data corresponding to a part of the analysis result from the measurement data. For example, out-of-plane displacement data or target data is calculated from the measurement data, and the calculated out-of-plane displacement data or target data can be used instead of the measurement data in steps S3 and S9. The out-of-plane displacement data or the target data is the data corresponding to a part of the analysis result.

The estimation method according to the present embodiment includes: a measurement step S1 for measuring the measurement data on at least one measurement point; a first analysis step S2, S8 for obtaining an analysis result by performing, using an analysis condition including the estimation target, a FEM analysis, a finite difference analysis, a boundary element method analysis, a particle method analysis, a meshfree method analysis, or an analysis with theoretical formula; a second analysis step S5 for setting a value obtained by applying perturbation to a value of the estimation target used in the first analysis step as the value of the estimation target and performing a FEM analysis, a finite difference analysis, a boundary element method analysis, a particle method analysis, a meshfree method analysis, or an analysis with theoretical formula to obtain an analysis result; and a calculation step for calculating a sensitivity matrix on the basis of the analysis result of the first analysis step and the analysis result of the second analysis step (step S6), calculating an error between the analysis result of the first analysis step and the measurement data at the measurement point or the data calculated from the measurement data (step S3, S9), and calculating an amount for changing the value of the estimation target from the sensitivity matrix and the error (step S7).

In the estimation method according to the present embodiment, the first analysis step, the second analysis step, and the calculation step are repeated until the error between the measurement data at the measurement point or the data calculated from the measurement data and the analysis result of the first analysis step is minimized.

In the first analysis step performed first (step S2), the analysis is performed with an initial value being set to the estimation target (parameter).

In the first analysis step performed second and subsequent times (step S8), the analysis is performed by setting, as the estimation target (parameter), a value obtained by changing the value (parameter) of the estimation target used in the previous first analysis step (step S2 or S8) by an amount for changing the value of the estimation target calculated in the previous calculation step (step S7).

Next, the present embodiment will be described with reference to the flowchart of Fig. 1. Note that steps S1 to S11 can be switched in random order, except that there is no logical consistency.

First, in the measurement step S1, measurement data (e.g., time-series data of a temperature distribution or displacement data) on at least one measurement point of the target object (e.g., metal plate) is measured. The measurement step S1 may include a step for calculating data (e.g., out-of-plane displacement data or target displacement data) corresponding to a part of the analysis result from the measurement data.

In a case where, for example, the time-series data of a temperature distribution (analysis result Y) of the target object (analysis model corresponding to the target object) is calculated with a heat conduction analysis, heat input processing is actually performed on the target object, and the time-series data of temperature at a measurement point of the target object that has been subjected to the heat input processing is measured. When multiple measurement points are set, the time-series data of temperature at each of the measurement points of the target object that has been subjected to the heat input processing is measured. The measurement point can be set at a location having a wide variation in temperature.

In a case where, for example, the displacement of the target object (analysis model corresponding to the target object) is calculated with a thermo-elasto-plastic analysis, heat input processing is actually performed on the target object, and the displacement at a measurement point of the target object is measured. When multiple measurement points are set, the displacement at each of the measurement points is measured.

The heat input processing includes, for example, gas heating, gas welding, gas cutting, arc welding, laser welding, resistance welding, or thermal spraying.

In a case where, for example, a distribution of generated heat of the target object is calculated with an electric field analysis (spot welding analysis), a voltage is applied to the target object to measure the time-series data of temperature at a measurement point of the target object. When multiple measurement points are set, the time-series data of temperature at each of the measurement points is measured.

In step S2, an initial value is set to the estimation target (parameter) included in the analysis condition X, and a FEM analysis, a finite difference analysis, a boundary element method analysis, a particle method analysis, a meshfree method analysis, or an analysis with theoretical formula is performed to calculate an analysis result. The analyses described above may be performed by a server on the Internet. In this case, the analysis condition X is transmitted to the server, and the analysis result Y is received from the server.

In addition, each of the analyses described above can provide an analysis result corresponding to the measurement data measured in measurement step S1 or the data calculated from the measurement data. In a case where, for example, the time-series data of temperature at the measurement point is measured in step S1, the analysis result also includes the time-series data of temperature at the measurement point (there may be an error between the measurement point of the measurement data and the measurement point of the analysis result).

In order to perform the FEM analysis, an analysis model corresponding to the shape and dimension of the target object (e.g., metal plate) is first generated. The analysis model has a large number of elements (meshes) divided by lines connecting node coordinates.

The FEM analysis is performed using the generated analysis model and the analysis condition including the estimation target, and an analysis result is calculated. In step S2, the FEM analysis is performed with an appropriate initial value being set to the estimation target (parameter).

In a case where, for example, time-series data of a temperature distribution (analysis result Y) of the target object (analysis model corresponding to the target object) is calculated with the FEM heat conduction analysis, a heat source model corresponding to the heat input processing in measurement step S1 is set as the analysis condition. Unknown heat source parameters (e.g., standard deviation $\sigma$ and heat efficiency $\eta$ of the heat source) in the heat source model are set as the estimation targets (parameters), and appropriate an initial value can be set to each of the estimation targets in step S2. Further, an offset amount in the time direction of the heat input distribution, a specific heat of the target object, and actual coordinates of the measurement point can be set as estimation targets (parameters), and an initial value can be set to each of the estimation targets.

In a case where the displacement of the target object (analysis model corresponding to the target object) is calculated with the FEM thermo-elasto-plastic analysis, a Young's modulus, for example, is set as the estimation target, and an appropriate initial value can be set to the Young's modulus in step S2.

In step S3, an error between the measurement data measured at the measurement point in the measurement step (step S1) and the analysis result Y corresponding to the measurement point in the analysis result calculated in step S2 is calculated. This error is a residual error and may be a k-th power error.

Fig. 3 is an explanatory diagram illustrating a method for calculating a k-th power error. The k-th power error $R(X^i, k)$ indicates the degree of deviation between the measurement data measured at the measurement point in measurement step S1 and the analysis result calculated in step S2. The symbol "$\Delta$" in the graph of Fig. 3 indicates the time-series data of observation values measured in the measurement step (step S1), and the curved line in the graph of Fig. 3 indicates the analysis result calculated in step S2. The symbol "X" in Fig. 3 indicates a value of the estimation target, and the symbol "i" indicates a trial number.

In step S4, it is determined whether or not the error calculated in step S3 is sufficiently small. When the error is sufficiently small, the processing proceeds to step S11 where the initial value set in step S2 is determined as the estimated value.

When the error is large, the processes of steps S5 and S6 are performed.

In steps S5 and S6, the FEM analysis, the finite difference analysis, the boundary element method analysis, the particle method analysis, the meshfree method analysis, or the analysis with theoretical formula is performed with perturbation being applied to the estimation target (parameter) to calculate an analysis result, and a sensitivity matrix is generated from the analysis result. Each of the above-mentioned analyses may be performed by a server on the Internet.

The sensitivity matrix indicates an effect of each of the estimation targets (parameters) on the analysis result.

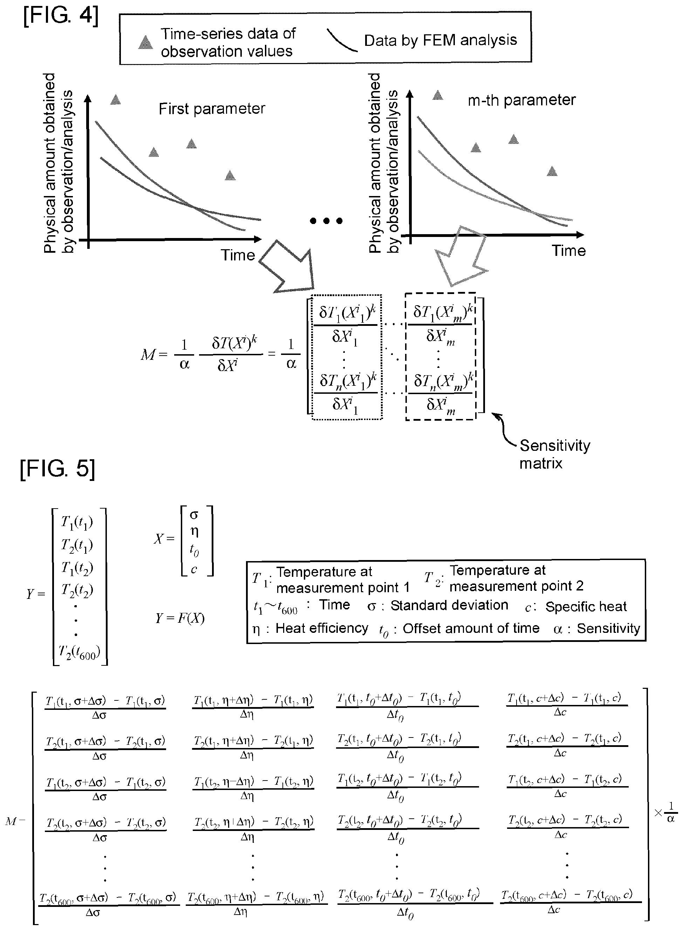

Figs. 4 and 5 illustrate graphs and mathematical expressions for describing the sensitivity matrix.

In step S5, the step for performing the FEM analysis, the finite difference analysis, the boundary element method analysis, the particle method analysis, the meshfree method analysis, or the analysis with theoretical formula with the value obtained by applying perturbation to one estimation target included in multiple estimation targets (parameters) being set as the value of the estimation target to obtain an analysis result is performed on all of the estimation targets. Further, the analysis in step S5 can be performed in a similar manner to the analysis in step S2, except that the value obtained by applying perturbation is set as the value of the estimation target.

For example, Fig. 4 describes a method for generating a sensitivity matrix when the FEM heat conduction analysis is performed using an analysis condition including m estimation targets (parameters) $X_1$ to $X_m$. Note that the superscript i of X represents the number of trials. $T_1$ to $T_n$ represent the time-series data Y of temperature. $\delta X$ represents perturbation to be applied to X. $\delta T$ represents the difference between the temperature calculated in step S5 and the temperature calculated in step S2. $\alpha$ represents the frequency of update of the estimation target (parameter).

First, $X_1$ in the m parameters is analyzed with the FEM heat conduction analysis with perturbation being applied thereto, and the time-series data Y of temperature is calculated. The parameters except for $X_1$ have the values used in step S2. From this analysis result, the left column of the sensitivity matrix is generated.

Next, $X_2$ in the m parameters is analyzed with the FEM heat conduction analysis with perturbation being applied thereto, and the time-series data Y of temperature is calculated. The parameters except for $X_2$ have the values used in step S2. From this analysis result, the second column from the left of the sensitivity matrix is generated.

Then, $X_3$ to $X_m$ are sequentially analyzed with the FEM heat conduction analysis with perturbation being applied thereto, and the columns of the sensitivity matrix are sequentially generated.

Fig. 5 describes a sensitivity matrix when the FEM heat conduction analysis (Y = F(X)) is performed using an analysis condition including a standard deviation $\sigma$, heat efficiency $\eta$, an offset amount $t_0$ of time, and a specific heat c as the estimation target X (parameter). In the measurement step (step S1), the time-series data of temperature is measured at measurement point 1 and measurement point 2. Therefore, the sensitivity matrix is generated using the analysis results (analysis results Y) at measurement point 1 and measurement point 2.

First, the standard deviation $\sigma$ among $\sigma$, $\eta$, $t_0$, and c is analyzed with the FEM heat conduction analysis with perturbation being applied thereto, and the time-series data Y of temperature is calculated. The parameters other than $\sigma$ have the values used in step S2. From this analysis result, the left column of the sensitivity matrix is generated.

Next, the heat efficiency $\eta$ among $\sigma$, $\eta$, $t_0$, and c is analyzed with the FEM heat conduction analysis with perturbation being applied thereto, and the time-series data Y of temperature is calculated. The parameters other than $\eta$ have the values used in step S2. From this analysis result, the second column from the left of the sensitivity matrix is generated.

Next, the offset amount $t_0$ among $\sigma$, $\eta$, $t_0$, and c is analyzed with the FEM heat conduction analysis with perturbation being applied thereto, and the time-series data Y of temperature is calculated. The parameters other than $t_0$ have the values used in step S2. From this analysis result, the third column from the left of the sensitivity matrix is generated.

Next, the specific heat c among $\sigma$, $\eta$, $t_0$, and c is analyzed with the FEM heat conduction analysis with perturbation being applied thereto, and the time-series data Y of temperature is calculated. The parameters other than c have the values used in step S2. From this analysis result, the column at the right end of the sensitivity matrix is generated.

In this manner, the sensitivity matrix is generated.

In step S7, an amount for changing the estimation target (parameter) is calculated from the sensitivity matrix generated in step S6 and the error calculated in step S3.

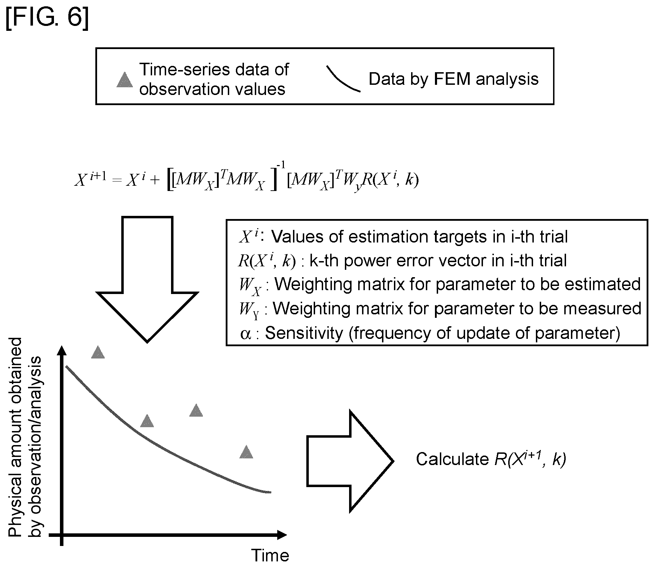

Fig. 6 illustrates a mathematical expression and an explanatory diagram for calculating an amount for changing the estimation target (parameter).

In the mathematical expression, $X^i$ (i is the number of trials) is the value of the estimation target (parameter) used in the FEM analysis, the finite difference analysis, the boundary element method analysis, the particle method analysis, the meshfree method analysis, or the analysis with theoretical formula in step S2, $[[MW_X]^T MW_X]^{-1}[MW_X]^T W_y R(X^i, k)$ is an amount for changing the value of the estimation target (parameter), and $X^{i+1}$ is a value of the estimation target (parameter) used for the FEM analysis, the finite difference analysis, the boundary element method analysis, the particle method analysis, the meshfree method analysis, or the analysis with theoretical formula in step S8. M is the sensitivity matrix calculated in step S6, and $R(X^i, k)$ is the error calculated in step S3. $W_X$ and $W_Y$ are weighting matrices.

By using such expression, the value of the estimation target (parameter) can be changed so as to reduce the error $R(X^i, k)$, and the value of the estimation target (parameter) (value of the updated estimation target) to be used for the FEM analysis, the finite difference analysis, the boundary element method analysis, the particle method analysis, the meshfree method analysis, or the analysis with theoretical formula in step S8 can be calculated.

In step S8, the FEM analysis, the finite difference analysis, the boundary element method analysis, the particle method analysis, the meshfree method analysis, or the analysis with theoretical formula is performed with the value calculated in step S7 (value of the updated estimation target (parameter)) being set to the estimation target (parameter) included in the analysis condition, and the analysis result Y is calculated ($Y = F(X)$). The analysis in step S8 can be performed in a similar manner to the analysis in step S2 except that the value calculated in step S7 is set to the estimation target. Each of the above analyses can be performed by a server on the Internet.

In step S9, an error between the measurement data measured at the measurement point in the measurement step (step S1) and the analysis result Y corresponding to the measurement point in the analysis result calculated in step S8 is calculated. The description for step S3 is applied to the "calculation of the error", as long as there is no contradiction.

In step S10, it is determined whether the error calculated in step S9 is sufficiently small or not. When the error is sufficiently small, the process of step S11 is performed to determine the value of the estimation target (parameter) set in step S8 (value of the estimation target calculated in step S7) as the estimated value.

When the error is large, the processing returns to step S5, and the processes of steps S5 to S10 are performed again. In steps S5 to S7 described above, the analysis condition and analysis result of the FEM analysis, the finite difference analysis, the boundary element method analysis, the particle method analysis, the meshfree method analysis, or the analysis with theoretical formula in step S2 and the error calculated in step S3 are used. On the other hand, in steps S5 to S7 that are performed again, the analysis condition and analysis result of the FEM analysis, the finite difference analysis, the boundary element method analysis, the particle method analysis, the meshfree method analysis, or the analysis with theoretical formula in previous step S8 and the error calculated in step S9 are used instead, and the processes of steps S5 to S7 are performed.

The processes of steps S5 to S10 are repeated until the error is minimized. The value of the estimation target (parameter) is updated so that the error is reduced due to the repetition. Therefore, the estimation accuracy of the estimation target is also improved by repeating the processes of steps S5 to S10.

When it is determined in step S10 that the error calculated in step S9 is sufficiently small, the value of the estimation target (parameter) set in previous step S8 (value of the estimation target calculated in step S7) is determined as the estimated value.

In this manner, the value of the estimation target (parameter) can be estimated with high accuracy.

With the heat conduction analysis (FEM analysis, finite difference analysis, boundary element method analysis, particle method analysis, meshfree method analysis, or analysis with theoretical formula) performed using a value estimated with the estimation method according to the present embodiment, time-series data of a temperature distribution in a region other than the measurement point can also be calculated with high accuracy. Therefore, a high accurate temperature distribution/time history that spreads threedimensionally can be obtained. Further, due to the heat conduction analysis described above, a weld penetration shape parameter (weld penetration width $B_a$, weld penetration depth $B_b$, etc.) and a molten pool shape parameter (thickness, width, and length of a molten pool) can also be calculated with high accuracy.

Further, with the thermo-elasto-plastic analysis (FEM analysis, finite difference analysis, boundary element method analysis, particle method analysis, meshfree method analysis, or analysis with theoretical formula) performed using a value estimated with the estimation method according to the present embodiment, a displacement distribution, a history of displacement, a history of stresses, a stress distribution, a history of strains, a strain distribution, and a residual stress distribution can also be calculated with high accuracy.

Furthermore, with the electric field analysis (spot welding analysis) (FEM analysis, finite difference analysis, boundary element method analysis, particle method analysis, meshfree method analysis, or analysis with theoretical formula) performed using a value estimated with the estimation method according to the present embodiment, a history of generated heat, a distribution of generated heat, a history of current densities, a current density distribution, a history of potentials, and a potential distribution can also be calculated with high accuracy.

Estimation of heat efficiency, standard deviation, offset amount of time, and specific heat

Heat efficiency, a standard deviation, an offset amount of time, and a specific heat were estimated using the above-mentioned estimation method.

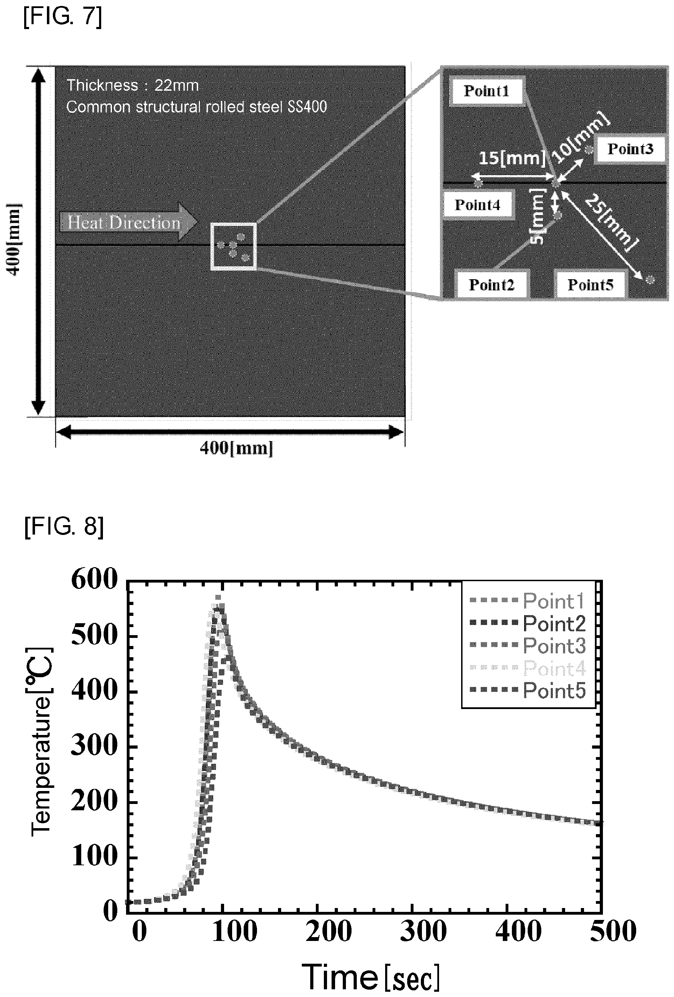

Five measurement points 1 to 5 were set in a central part of a metal plate (having a square shape of 400 mm x 400 mm with a thickness of 22 mm) made of common structural rolled steel SS400, and a thermocouple was set on each of the measurement points. Fig. 7 shows the detailed positions of the measurement points 1 to 5. At each of the measurement points, a thermocouple was inserted into a hole opened in the back surface of the metal plate and placed at a position 2 mm from the surface of the metal plate.

As illustrated in Fig. 7, the surface of the metal plate was heated with gas from end to end along a straight line connecting the midpoint of one side of the metal plate and the midpoint of the side facing the one side, and the time-series data of temperatures at measurement points 1 to 5 was measured using the thermocouples (step S1). As the heating condition, the flow rate of a fuel gas (city gas 13A) was set to 2.3 $m^3$/h, the flow rate of an oxygen gas was set to 4.0 $m^3$/h, the torch feed rate was set to 160 mm/min, and the torch distance was set to 35 mm.

Fig. 8 shows temperature changes at the measured measurement points 1 to 5.

Next, a FEM heat conduction analysis was performed using, as an analysis condition, an analysis model (number of nodes: 128982, number of elements: 106860) generated based on the shape and dimension of the metal plate, a heat source model corresponding the gas heating described above, a material constant of the common structural rolled steel SS400, etc. to calculate an analysis result (time-series data of temperatures at measurement points 1 to 5 (5000 pieces from 0.1 to 500 sec at an interval of 0.1 sec) (step S2). Heat efficiency $\eta$, a standard deviation $\sigma$, an offset amount $t_0$ of time, and a specific heat c in the analysis condition were set as estimation targets (parameters). The initial values of the parameters were set as follows.

$$\eta = 0.1$$

$$\sigma = 10 \text{ mm}$$

$$t_0 = 0 \text{ sec}$$

$$c = 0.3 \text{ kJ/kgK}$$

Thereafter, the processes of steps S3 and S4 were performed in accordance with the flowchart in Fig. 1, and then, the processes of steps S5 to S10 were repeated. The FEM analysis using the updated estimation targets (parameters) (step S8) were performed nine times (the number of trials was nine).

The estimated values determined in step S11 were as follows.

$$\eta = 0.301$$

$$\sigma = 31.4 \text{ mm}$$

$$t_0 = -12.8 \text{ sec}$$

$$c = 0.487 \text{ kJ/kgK}$$

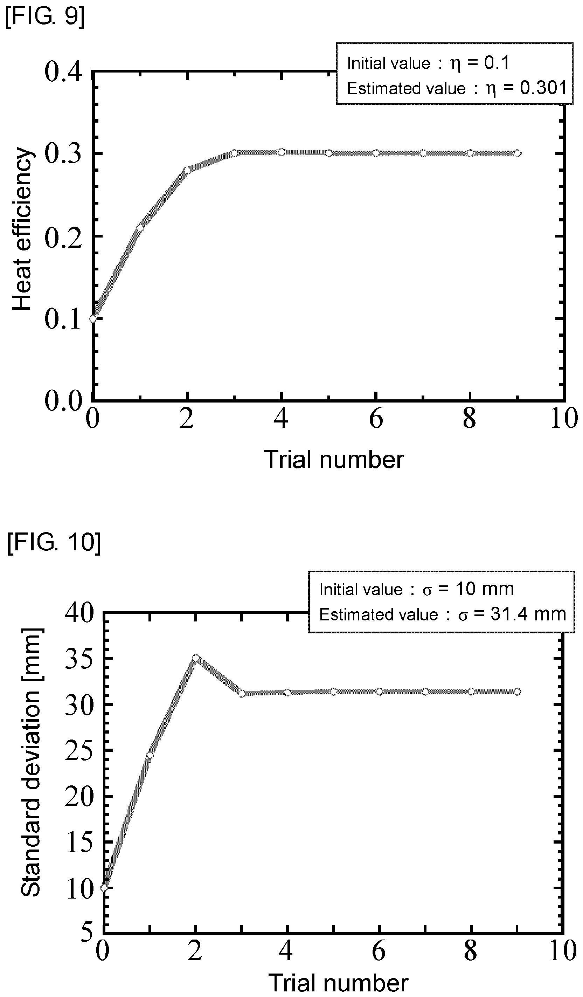

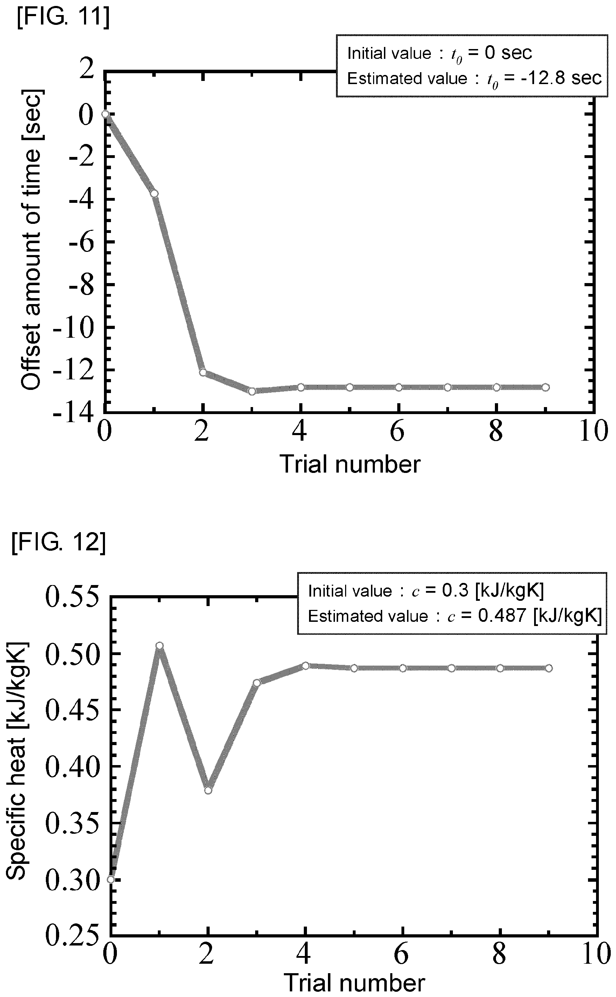

Fig. 9 is a graph showing a change in the value of the heat efficiency $\eta$ with respect to the number of trials, Fig. 10 is a graph showing a change in the value of the standard deviation $\sigma$ with respect to the number of trials, Fig. 11 is a graph showing a change in the value of the offset amount $t_0$ of time with respect to the number of trials, and Fig. 12 is a graph showing a change in the value of the specific heat c with respect to the number of trials.

As can be seen from these graphs, after the number of trials exceeds four, the value of each of the estimation targets (parameters) was nearly unchanged.

Next, the FEM heat conduction analysis was performed using the estimated values ($\eta = 0.301$, $\sigma = 31.4$ mm, $t_0 = -12.8$ sec, and $c = 0.487$ kJ/kgK) determined in step S11 to calculate analysis results (time-series data of temperatures at measurement points 1 to 5).

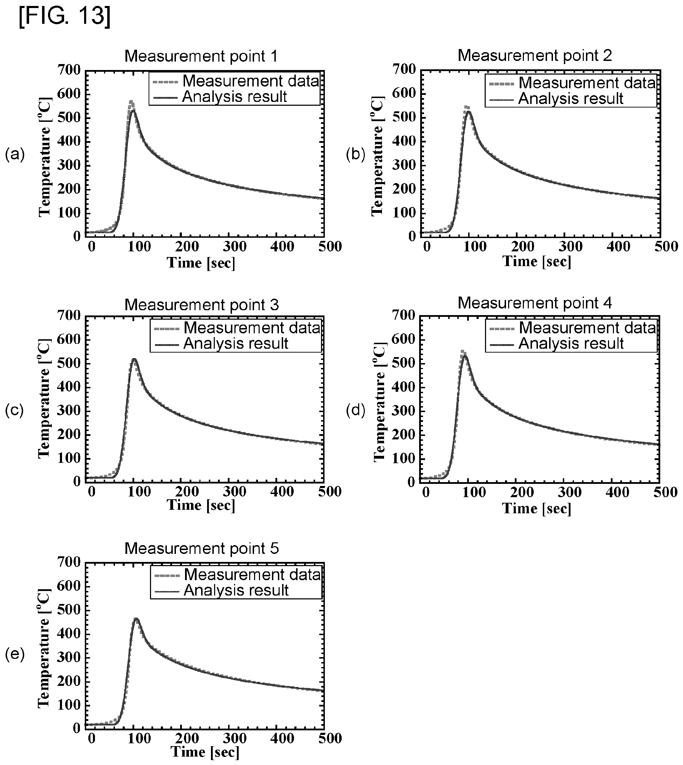

Figs. 13(a) to 13(e) illustrate the analysis results. Figs. 13(a) to 13(e) also illustrate temperature changes (measurement data) at measurement points 1 to 5 measured in step S1 for comparison.

As is apparent from Figs. 13(a) to 13(e), it is found that the temperature changes at measurement points 1 to 5 calculated by the FEM heat conduction analysis substantially coincide with the temperature changes at measurement points 1 to 5 actually measured. Therefore, it can be considered that the estimation targets (parameters) can be accurately estimated.

Estimation of temperature dependence of yield stress

The temperature dependence of yield stress at multiple temperatures was estimated using the above-mentioned estimation method.

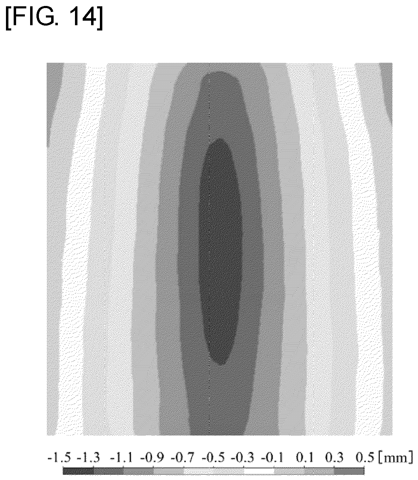

The surface of a metal plate (having a square shape of 400 mm x 400 mm with a thickness of 22 mm) made of common structural rolled steel SS400 was heated with gas from end to end along a straight line connecting the midpoint of one side of the metal plate and the midpoint of the side facing the one side (this is similar to the process in Fig. 7). As the heating condition, the flow rate of a fuel gas (city gas 13A) was set to 2.3 $m^3$/h, the flow rate of an oxygen gas was set to 4.0 $m^3$/h, the torch feed rate was set to 160 mm/min, and the torch distance was set to 35 mm. The shape of the metal plate was measured before and after the heat treatment using a laser tracker to calculate out-of-plane displacement of the metal plate due to the heat treatment (step S1). Fig. 14 shows a distribution of the calculated out-of-plane displacement of the metal plate. The distribution of the out-of-plane displacement was used instead of the measurement data in steps S3 and S9.

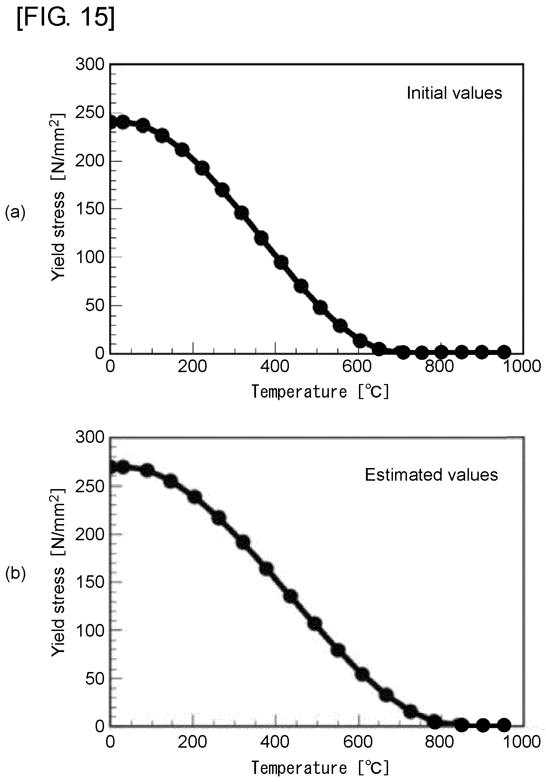

Next, a FEM thermo-elasto-plastic analysis was performed using, as an analysis condition, an analysis model (number of nodes: 128982, number of elements: 106860) generated based on the shape and dimension of the metal plate, a heat input distribution calculated by the FEM heat conduction analysis described above, yield stresses at multiple temperatures (temperature dependence of yield stress), etc. to calculate an analysis result (out-of-plane displacement distribution) (step S2). The initial values of the yield stresses at multiple temperatures in the analysis condition were set as shown in the graph in Fig. 15(a).

Thereafter, the processes of steps S3 and S4 were performed in accordance with the flowchart in Fig. 1, and then, the processes of steps S5 to S10 were repeated. The number of trials was 40.

The graph in Fig. 15(b) shows estimated values (yield stresses at multiple temperatures, temperature dependence of yield stress) determined in step S11. The estimated value of the yield stress at room temperature was 270 MPa.

Next, the FEM thermo-elasto-plastic analysis was performed using the estimated value determined in step S11 to calculate an analysis result (out-of-plane displacement distribution).

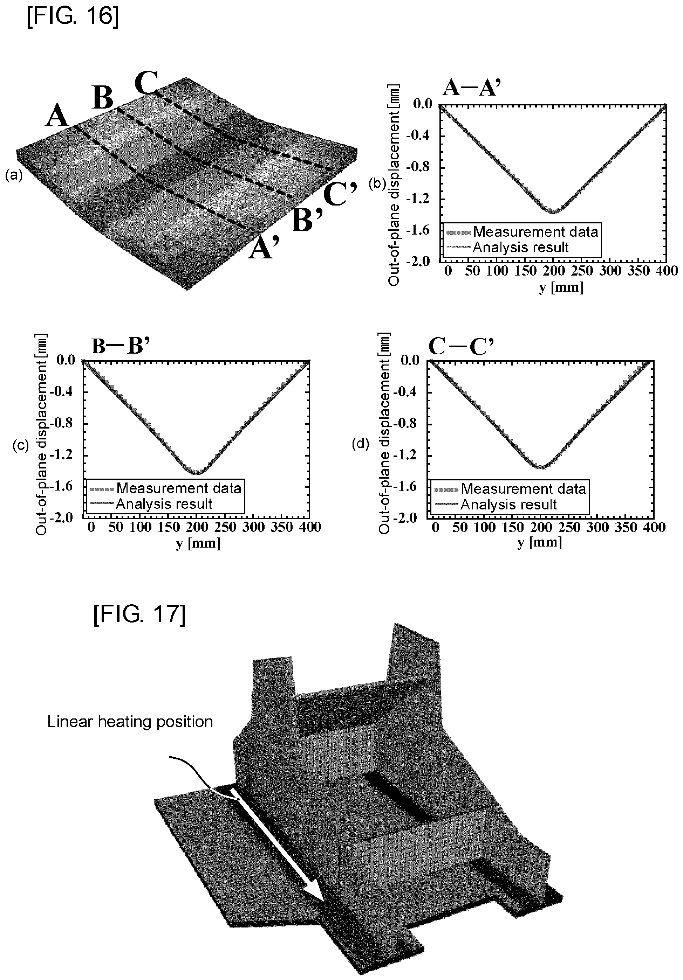

Fig. 16(a) shows an analysis model that is the analysis result. Figs. 16(b) to 16(d) respectively show the analysis results (out-of-plane displacement distributions) along broken lines A-A', B-B', and C-C' shown in Fig. 16(a) and the out-of-plane displacement distributions measured in step S1 along the broken lines A-A', B-B', and C-C'.

As is apparent from Figs. 16(b) to 16(d), it is found that the out-of-plane displacement distribution calculated by the FEM thermo-elasto-plastic analysis substantially coincide with the actually measured out-of-plane displacement distribution. Therefore, it can be considered that the estimation targets (parameters) can be accurately estimated.

A metal plate (having a square shape of 400 mm x 400 mm with a thickness of 22 mm) made of common structural rolled steel SS400 was subjected to a tensile test to measure the yield stress at room temperature. The measured value of the yield stress at room temperature of the metal plate was 263 MPa. The estimated value of the yield stress at room temperature of the metal plate was 270 MPa, and thus, it is considered that the yield stress can be accurately estimated.

Estimation of torch rate

The torch rate in a preset distortion process for canceling, with linear heating, the out-of-plane displacement generated in assembly welding of a complex structure illustrated in Fig. 17 in advance was estimated using the above-mentioned estimation method.

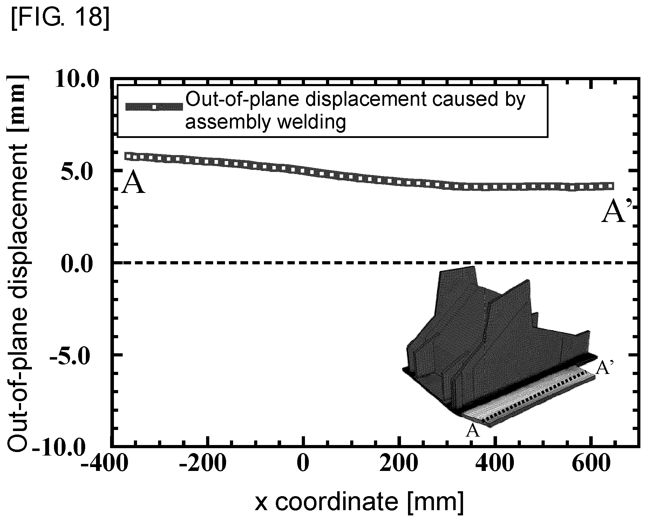

A portion along a dotted line A-A' of the complex structure having significant out-of-plane displacement in a graph in Fig. 18 was set as an evaluation position. Out-of-plane displacement for canceling the out-of-plane displacement was calculated from an out-of-plane displacement distribution along the dotted line A-A', and the calculated out-of-plane displacement was set as target distortion. Fig. 18 shows the out-of-plane displacement distribution of the complex structure along the dotted line A-A'.

The target distortion was used instead of the measurement data in steps S3 and S9 in the flowchart in Fig. 1.

An analysis model of the complex structure as illustrated in Fig. 17 was generated.

The number of nodes of the analysis model was 669990, the number of elements was 610190, and the material of the metal plate was SS400. In steps S2, S5, and S8 in the flowchart in Fig. 1, a FEM thermo-elasto-plastic analysis was performed with the position indicated by an arrow in Fig. 17 being set as a linear heating position, and an analysis result (out-of-plane displacement distribution along the dotted line A-A') was calculated (step S2).

In the FEM thermo-elasto-plastic analysis, two torches were arranged with a space of 55 mm therebetween for tandem heating. The heat input amount of the front torch was 26250 W, and the heat input amount of the rear torch was 23750 W. The front torch and the rear torch both had a heat efficiency $\eta$ of 0.293. The standard deviation $\sigma$ when the heat input distribution was assumed to have a normal distribution was 29.3 mm for both the front torch and the rear torch. The front torch and the rear torch were both heated at a torch rate $v_0$, and when the heated length of the front torch reached 602 mm, the torch rate of the front torch and the rear torch was changed from $v_0$ to $v_1$. The torch rate was optimized as indicated in the flowchart in Fig. 1 so as to reduce deviation between the target distortion and the out-of-plane displacement that is the analysis result at the evaluation position (along dotted ling A-A') with the initial values of the torch rate $v_0$ and the torch rate $v_1$ being set to 4.0 mm/sec. In addition, $W_X$ and $W_y$ were defined as identity matrices.

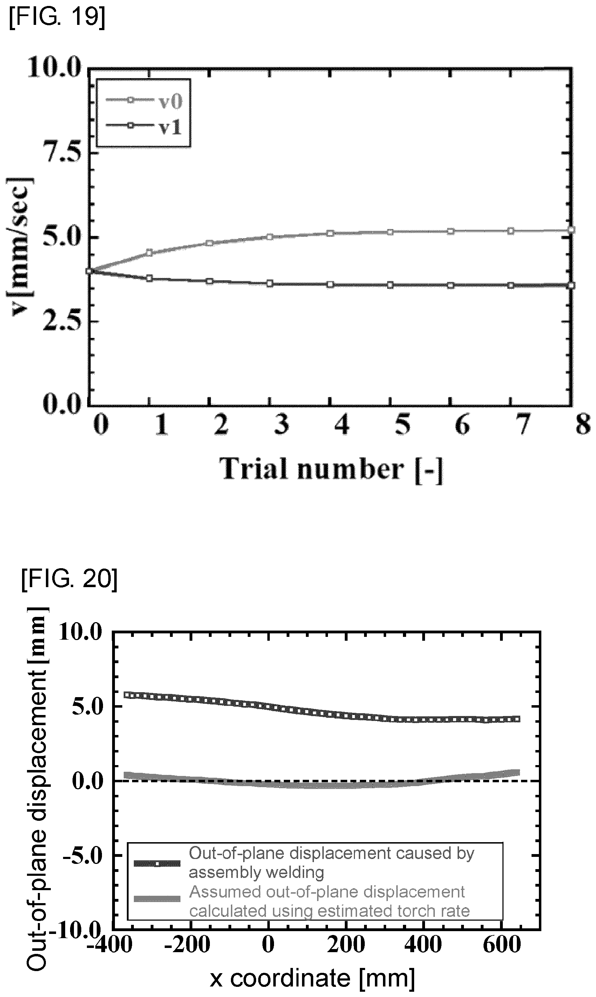

Fig. 19 shows the transition of the torch rates $v_0$ and $v_1$. The horizontal axis represents the number of times the parameter is updated, and the vertical axis represents the torch rate. It can be seen from Fig. 19 that the torch rates $v_0$ and $v_1$ show little change and are converged to constant values after the trial number reaches five. The torch rate $v_0$ was converged to 5.23 mm/sec, and the torch rate $v_1$ was converged to 3.59 mm/sec. These values were determined as optimum solutions and determined as estimated values (step S11).

The FEM thermo-elasto-plastic analysis (forward analysis) was performed using the estimated torch rates ($v_0$ = 5.23 mm/sec, $v_1$ = 3.59 mm/sec) with the position indicated by the arrow in Fig. 17 being set as the linear heating position, and an analysis result (out-of-plane displacement distribution along the dotted line A-A') was calculated.

Fig. 20 shows the amount of distortion generated by assembly welding and assumed out-of-plane displacement after the assembly welding obtained by adding the out-of-plane displacement measured during the assembly welding to the out-of-plane displacement after linear heating at the evaluation position (along dotted line A-A') using the estimated torch rates ($v_0$ = 5.23 mm/sec, $v_1$ = 3.59 mm/sec).

As shown in Fig. 20, it can be analytically confirmed that the out-of-plane displacement during assembly welding when linear heating under the heating condition including the estimated torch rates ($v_0$ = 5.23 mm/sec, $v_1$ = 3.59 mm/sec) was performed significantly canceled the out-of-plane displacement due to the assembly welding at the evaluation position (along dotted line A-A').

**Claims**

1. An estimation method for estimating at least one estimation target included in an analysis condition from an analysis result and measurement data corresponding to a part of the analysis result or data calculated from the measurement data, the method comprising:

    a measurement step of measuring the measurement data on at least one measurement point;
    a first analysis step to obtain an analysis result, using an analysis condition including the estimation target, through a FEM analysis, a finite difference analysis, a boundary element method analysis, a particle method analysis, a meshfree method analysis, or an analysis with theoretical formula;
    a second analysis step of setting a value obtained by applying perturbation to the value of the estimation target used in the first analysis step as a value of the estimation target and performing a FEM analysis, a finite difference analysis, a boundary element method analysis, a particle method analysis, a meshfree method analysis, or an analysis with theoretical formula to obtain an analysis result; and
    a calculation step of calculating a sensitivity matrix on the basis of the analysis result of the first analysis step and the analysis result of the second analysis step, calculating an error between the analysis result of the first analysis step and the measurement data at the measurement point or the data calculated from the measurement data, and calculating an amount for changing the value of the estimation target from the sensitivity matrix and the error, wherein
    the first analysis step, the second analysis step, and the calculation step are repeated until the error is minimized,
    in the first analysis step performed first, the analysis is performed with an initial value being set to the estimation target, and
    in the first analysis step performed second and subsequent times, the value of the estimation target used in the first analysis step performed previously is changed to the value obtained by changing by the amount for changing calculated in the calculation step performed previously and the analysis is performed.

2. The estimation method according to claim 1, wherein

    the analysis condition includes the estimation target pertaining to a plurality of types,
    the second analysis step is a step of performing, on each of the types of the estimation target, a step of setting a value obtained by applying perturbation to the estimation target pertaining to one type included in the plurality of types of the estimation target as a value of the estimation target and performing a FEM analysis, a finite difference analysis, a boundary element method analysis, a particle method analysis, a meshfree method analysis, or an analysis with theoretical formula to obtain an analysis result, and
    the calculation step is a step for calculating an amount for changing the value of each of the types of the estimation target.

3. The estimation method according to claim 1, wherein the measurement data is time-series data.

4. The estimation method according to claim 1, wherein

    the measurement step is a step of measuring the measurement data at a plurality of measurement points, and
    the calculation step is a step of calculating a sensitivity matrix on the basis of the analysis result of the first analysis step and the analysis result of the second analysis step, calculating error between the analysis result of the first analysis step and the measurement data at each of the measurement points or data calculated from the measurement data, and calculating an amount for changing the value of the estimation target from the sensitivity matrix and the error.

5. The estimation method according to claim 1, wherein the error is k-th power error.

6. The estimation method according to claim 1, wherein the calculation step includes calculating the amount for changing the value of the estimation target by adding weight to a parameter of the analysis result and a parameter of the estimation target.

7. The estimation method according to claim 1, wherein

the first and second analysis steps are steps of performing a heat conduction analysis, and the measurement step is a step of measuring a temperature change at the measurement point when a target object is heated.

8. The estimation method according to claim 7, wherein the estimation target includes at least one of the heat efficiency of a heat source, a heat transfer coefficient, a standard deviation of a heat input distribution, a Goldak heat source parameter, an offset amount in a time direction of the heat input distribution, a specific heat or heat capacity of the target object, a density of the target object, a thermal conductivity of the target object, and actual coordinates (x, y, z) of the measurement point.

9. The estimation method according to claim 1, wherein the first and second analysis steps are steps for performing a thermo-elasto-plastic analysis, and the estimation target includes at least one of a Young's modulus, a Poisson ratio, a yield stress, a linear coefficient of expansion, an anneal temperature, a work-hardening parameter, a creep coefficient, an offset variable of time, an offset variable of space, a mechanical melting temperature, and a parameter regarding a processing condition such as a heat input rate in linear heating.

10. The estimation method according to claim 9, wherein the measurement step is a step for measuring displacement generated by heating/cooling the target object at the measurement point.

11. The estimation method according to claim 1, wherein

the first and second analysis steps are steps for performing an electric field analysis, and the estimation target includes at least one of a contact resistance, an electric conductivity, an offset variable of time, and an offset variable of space.

12. An analysis method for performing a FEM analysis, a finite difference analysis, a boundary element method analysis, a particle method analysis, a meshfree method analysis, or an analysis with theoretical formula using an analysis condition including a value of the estimation target estimated by the estimation method according to any one of claims 1 to 11.

13. An analysis method comprising a step for performing a heat conduction analysis using an analysis condition including value of the estimation target estimated by the estimation method according to claim 7 or 8, wherein an output of the heat conduction analysis includes at least one of a history of temperatures, a temperature distribution, a weld penetration shape parameter, and a molten pool shape parameter.

14. A program for causing a computer to execute an estimation method of estimating at least one estimation target included in an analysis condition from an analysis result and measurement data corresponding to a part of the analysis result or data calculated from the measurement data,

the measurement data being data measured on at least one measurement point, the estimation method comprising:

a first analysis step of obtaining an analysis result of a FEM analysis, a finite difference analysis, a boundary element method analysis, a particle method analysis, a meshfree method analysis, or an analysis with theoretical formula performed using an analysis condition including the estimation target;
a second analysis step of obtaining an analysis result of a FEM analysis, a finite difference analysis, a boundary element method analysis, a particle method analysis, a meshfree method analysis, or an analysis with theoretical formula performed with a value obtained by applying perturbation to a value of the estimation target used in the first analysis step being set as a value of the estimation target; and
a calculation step of calculating a sensitivity matrix on the basis of the analysis result of the first analysis step and the analysis result of the second analysis step, calculating an error between the analysis result of the first analysis step and the measurement data at the measurement point or the data calculated from the measurement data, and calculating an amount for changing the value of the estimation target from the sensitivity matrix and the error, wherein
the first analysis step, the second analysis step, and the calculation step are repeated until the error is minimized,
the FEM analysis, the finite difference analysis, the boundary element method analysis, the particle method analysis, the meshfree method analysis, or the analysis with theoretical formula in the first analysis step performed first is an analysis performed with an initial value being set to the estimation target, and
the FEM analysis, the finite difference analysis, the boundary element method analysis, the particle method analysis, the meshfree method analysis, or the analysis with theoretical formula in the first analysis step performed second and subsequent times is an analysis performed by setting, as the estimation target, a value obtained by changing the value of the estimation target used in the first analysis step performed previously by the amount for changing calculated in the calculation step performed previously.

15. An estimation device comprising a control unit, wherein

the control unit is provided to execute an estimation method for estimating an estimation target pertaining to at least one type and included in an analysis condition from an analysis result and measurement data corresponding to a part of the analysis result or data calculated from the measurement data,
the measurement data being data measured on at least one measurement point,
the estimation method comprising:

a first analysis step of obtaining an analysis result of a FEM analysis, a finite difference analysis, a boundary element method analysis, a particle method analysis, a meshfree method analysis, or an analysis with theoretical formula performed using an analysis condition including the estimation target;
a second analysis step for obtaining an analysis result of a FEM analysis, a finite difference analysis, a boundary element method analysis, a particle method analysis, a meshfree method analysis, or an analysis with theoretical formula performed with a value obtained by applying perturbation to a value of the estimation target used in the first analysis step being set as a value of the estimation target; and
a calculation step for calculating a sensitivity matrix on the basis of the analysis result of the first analysis step and the analysis result of the second analysis step, calculating an error between the analysis result of the first analysis step and the measurement data at the measurement point or the data calculated from the measurement data, and calculating an amount for changing the value of the estimation target from the sensitivity matrix and the error, wherein
the first analysis step, the second analysis step, and the calculation step are repeated until the error is minimized,
the FEM analysis, the finite difference analysis, the boundary element method analysis, the particle method analysis, the meshfree method analysis, or the analysis with theoretical formula in the first analysis step performed first is an analysis performed with initial value being set to the estimation target, and
the FEM analysis, the finite difference analysis, the boundary element method analysis, the particle method analysis, the meshfree method analysis, or the analysis with theoretical formula in the first analysis step performed second and subsequent times is an analysis performed by setting, as the estimation target, a value obtained by changing the value of the estimation target used in the first analysis step performed previously by the amount for changing calculated in the calculation step performed previously.

16. The estimation device according to claim 15, wherein the control unit is provided to transmit at least a part of the analysis condition to an outside of the estimation device and receive at least a part of the analysis result from the outside of the estimation device in the first or second analysis step.

## [FIG. 1]

```
                              ( Start )
        S1 ┌──────────────────────────────┐
           │       Measurement step        │
           └──────────────────────────────┘
        S2 ┌──────────────────────────────┐
           │  Set initial values to estimation │
           │  targets and perform analysis │
           └──────────────────────────────┘
        S3 ┌──────────────────────────────┐
           │ Calculate error between measurement │
           │   data and analysis result    │
           └──────────────────────────────┘
                            S4
      Yes          ◇ Is error minimized? ◇
                            No
        S5 ┌──────────────────────────────┐
           │  Apply perturbation to estimation │
           │   targets and perform analysis │
           └──────────────────────────────┘
        S6 ┌──────────────────────────────┐
           │   Generate sensitivity matrix  │
           │ from analysis result of analysis │
           └──────────────────────────────┘
        S7 ┌──────────────────────────────┐
           │ Calculate amount for changing estimation │
           │ targets from sensitivity matrix and error │
           └──────────────────────────────┘
        S8 ┌──────────────────────────────┐
           │    Change estimation targets   │
           │      and perform analysis      │
           └──────────────────────────────┘
        S9 ┌──────────────────────────────┐
           │ Calculate error between measurement │
           │   data and analysis result    │
           └──────────────────────────────┘
                     S10                 No
            ◇ Is error minimized? ◇
                            Yes
       S11 ┌──────────────────────────────┐
           │  Determine estimated values    │
           │    of estimation targets       │
           └──────────────────────────────┘
                             ( End )
```

[FIG. 2]

[FIG. 3]

$$R(X^i,\ k) = \left\{ \begin{array}{c} r(X)_1^{\mathrm{k}} \\ r(X)_2^{\mathrm{k}} \\ \vdots \\ r(X)_n^{\mathrm{k}} \end{array} \right\}$$

[FIG. 4]

| ▲ Time-series data of observation values | ╲ Data by FEM analysis |

First parameter

m-th parameter

Physical amount obtained by observation/analysis — Time

$$M = \frac{1}{\alpha}\frac{\delta T(X^i)^k}{\delta X^i} = \frac{1}{\alpha}\begin{bmatrix} \dfrac{\delta T_1(X^i_1)^k}{\delta X^i_1} & \cdots & \dfrac{\delta T_1(X^i_m)^k}{\delta X^i_m} \\ \vdots & \ddots & \vdots \\ \dfrac{\delta T_n(X^i_1)^k}{\delta X^i_1} & \cdots & \dfrac{\delta T_n(X^i_m)^k}{\delta X^i_m} \end{bmatrix}$$

Sensitivity matrix

[FIG. 5]

$$Y = \begin{bmatrix} T_1(t_1) \\ T_2(t_1) \\ T_1(t_2) \\ T_2(t_2) \\ \vdots \\ T_2(t_{600}) \end{bmatrix} \qquad X = \begin{bmatrix} \sigma \\ \eta \\ t_0 \\ c \end{bmatrix}$$

$$Y = F(X)$$

$T_1$: Temperature at measurement point 1    $T_2$: Temperature at measurement point 2
$t_1 \sim t_{600}$ : Time    $\sigma$ : Standard deviation    $c$ : Specific heat
$\eta$ : Heat efficiency    $t_0$ : Offset amount of time    $\alpha$ : Sensitivity

$$M = \begin{bmatrix} \dfrac{T_1(t_1, \sigma+\Delta\sigma) - T_1(t_1, \sigma)}{\Delta\sigma} & \dfrac{T_1(t_1, \eta+\Delta\eta) - T_1(t_1, \eta)}{\Delta\eta} & \dfrac{T_1(t_1, t_0+\Delta t_0) - T_1(t_1, t_0)}{\Delta t_0} & \dfrac{T_1(t_1, c+\Delta c) - T_1(t_1, c)}{\Delta c} \\[2mm] \dfrac{T_2(t_1, \sigma+\Delta\sigma) - T_2(t_1, \sigma)}{\Delta\sigma} & \dfrac{T_2(t_1, \eta+\Delta\eta) - T_2(t_1, \eta)}{\Delta\eta} & \dfrac{T_2(t_1, t_0+\Delta t_0) - T_2(t_1, t_0)}{\Delta t_0} & \dfrac{T_2(t_1, c+\Delta c) - T_2(t_1, c)}{\Delta c} \\[2mm] \dfrac{T_1(t_2, \sigma+\Delta\sigma) - T_1(t_2, \sigma)}{\Delta\sigma} & \dfrac{T_1(t_2, \eta+\Delta\eta) - T_1(t_2, \eta)}{\Delta\eta} & \dfrac{T_1(t_2, t_0+\Delta t_0) - T_1(t_2, t_0)}{\Delta t_0} & \dfrac{T_1(t_2, c+\Delta c) - T_1(t_2, c)}{\Delta c} \\[2mm] \dfrac{T_2(t_2, \sigma+\Delta\sigma) - T_2(t_2, \sigma)}{\Delta\sigma} & \dfrac{T_2(t_2, \eta+\Delta\eta) - T_2(t_2, \eta)}{\Delta\eta} & \dfrac{T_2(t_2, t_0+\Delta t_0) - T_2(t_2, t_0)}{\Delta t_0} & \dfrac{T_2(t_2, c+\Delta c) - T_2(t_2, c)}{\Delta c} \\[2mm] \vdots & \vdots & \vdots & \vdots \\[2mm] \dfrac{T_2(t_{600}, \sigma+\Delta\sigma) - T_2(t_{600}, \sigma)}{\Delta\sigma} & \dfrac{T_2(t_{600}, \eta+\Delta\eta) - T_2(t_{600}, \eta)}{\Delta\eta} & \dfrac{T_2(t_{600}, t_0+\Delta t_0) - T_2(t_{600}, t_0)}{\Delta t_0} & \dfrac{T_2(t_{600}, c+\Delta c) - T_2(t_{600}, c)}{\Delta c} \end{bmatrix} \times \frac{1}{\alpha}$$

[FIG. 6]

| | |
|---|---|
| ▲ Time-series data of observation values | ╲ Data by FEM analysis |

$$X^{i+1} = X^i + \left[[MW_X]^T MW_X\right]^{-1} [MW_X]^T W_y R(X^i, k)$$

$X^i$: Values of estimation targets in i-th trial

$R(X^i, k)$ : k-th power error vector in i-th trial

$W_X$ : Weighting matrix for parameter to be estimated

$W_Y$ : Weighting matrix for parameter to be measured

$\alpha$ : Sensitivity (frequency of update of parameter)

Physical amount obtained by observation/analysis

Time

Calculate $R(X^{i+1}, k)$

[FIG. 7]

[FIG. 8]

[FIG. 9]

Initial value : η = 0.1
Estimated value : η = 0.301

[FIG. 10]

Initial value : σ = 10 mm
Estimated value : σ = 31.4 mm

[FIG. 11]

Initial value : $t_0 = 0$ sec
Estimated value : $t_0 = -12.8$ sec

Offset amount of time [sec] vs Trial number

[FIG. 12]

Initial value : $c = 0.3$ [kJ/kgK]
Estimated value : $c = 0.487$ [kJ/kgK]

Specific heat [kJ/kgK] vs Trial number

[FIG. 13]

[FIG. 14]

-1.5 -1.3 -1.1 -0.9 -0.7 -0.5 -0.3 -0.1 0.1 0.3 0.5 [mm]

[FIG. 15]

(a)

Initial values

(b)

Estimated values

[FIG. 16]

[FIG. 17]

Linear heating position

[FIG. 18]

[FIG. 19]

[FIG. 20]

## INTERNATIONAL SEARCH REPORT

International application No.

**PCT/JP2023/028972**

| A. | CLASSIFICATION OF SUBJECT MATTER |
|---|---|

*G06N 99/00*(2019.01)i; *G01N 25/18*(2006.01)i
FI:    G06N99/00 180; G01N25/18 L

According to International Patent Classification (IPC) or to both national classification and IPC

| B. | FIELDS SEARCHED |
|---|---|

Minimum documentation searched (classification system followed by classification symbols)

G06N99/00; G01N25/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | 中ノ 智史 ほか, "アンサンブルカルマンフィルタによる弾塑性有限要素解析のデータ同化", 第31回計算力学講演会講演論文集, 2018, pp. 1-4<br>entire text, all drawings, (NAKANO, Satoshi et al. Data assimilation of Elastoplastic Finite Element Analysis Based on the Ensemble Kalman Filter.), non-official translation (Lecture Proceedings of 31st the Computational Mechanics Conference) | 1-16 |
| A | JP 2016-017773 A (UNIV SHINSHU) 01 February 2016 (2016-02-01)<br>entire text, all drawings | 1-16 |
| A | JP 2005-050283 A (FUJI ELECTRIC HOLDINGS CO LTD) 24 February 2005 (2005-02-24)<br>entire text, all drawings | 1-16 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 October 2023** | **31 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/028972**

| Patent document cited in search report | | | Publication date (day/month/year) | Patent family member(s) | Publication date (day/month/year) |
|---|---|---|---|---|---|
| JP | 2016-017773 | A | 01 February 2016 | (Family: none) | |
| JP | 2005-050283 | A | 24 February 2005 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Journal of the Japan Welding Society*, 2011, vol. 80, 519-522

- *Tenki", the bulletin journal of the Meteorological Society of Japan in Japanese*, 2012, vol. 59 (11), 49-51